# EUROPÄISCHE PATENTSCHRIFT

(11) **EP 3 138 401 B1**
(45) Veröffentlichungstag und Bekanntmachung des Hinweises auf die Patenterteilung: **02.01.2019**
(21) Anmeldenummer: 15196743.7
(22) Anmeldetag: 27.11.2015
(51) Int. Cl.: A01N 59/00, A01N 25/22, A01N 25/10, A01P 1/00, C11D 3/37, C11D 3/39, C11D 3/48

(54) **ZUSAMMENSETZUNG ZUR DESINFEKTION**
DISINFECTANT COMPOSITION
COMPOSITION DE DESINFECTION

(30) Priorität: 04.09.2015 EP 15002604; 07.10.2015 EP 15188758
(43) Veröffentlichungstag der Anmeldung: 08.03.2017
(73) Patentinhaber: WCP Weidner Chemie-Produktions-GmbH, 45701 Herten (DE)
(72) Erfinder: Nachstedt, Klaus, 30989 Gehrden (DE)
(74) Vertreter: Von Rohr Patentanwälte Partnerschaft mbB

(56) Entgegenhaltungen:
- WO-A1-2007/125101
- US-A- 5 521 257
- US-A- 5 610 264
- US-A- 5 840 250
- US-A1- 2005 255 172
- US-A1- 2010 143 491
- DATABASE WPI Week 201509 Thomson Scientific, London, GB; AN 2015-089460 XP002754411, -& CN 104 192 870 A (ANHUI GREEN TITAN ENVIRONMENTAL TECHNOLO) 10. Dezember 2014 (2014-12-10)

## Beschreibung

Die vorliegende Erfindung betrifft das technische Gebiet der Mikrobizide, insbesondere die Abtötung von Mikroben zu hygienischen Zwecken. Insbesondere betrifft die vorliegende Erfindung eine Zusammensetzung mit mikrobizider Wirkung sowie deren Verwendung.
Darüber hinaus betrifft die vorliegende Erfindung die Verwendung einer Kombination aus mindestens einem Polymer und Wasserstoffperoxid zur Desinfektion.
Schließlich betrifft die vorliegende Erfindung die Verwendung spezieller Polymere zur Steigerung der mikrobiziden Wirkung von Wasserstoffperoxid.
Auf dem Gebiet der Desinfektion, insbesondere der Desinfektion von Oberflächen aller Art, sowie der Wasseraufbereitung waren Präparate auf Chlorbasis lange Zeit der Goldstandard und wurden umfänglich eingesetzt. Insbesondere Produkte auf Basis von elementarem Chlor, Hypochlorit sowie Chlordioxid oder ihrer wässrigen Lösungen fanden aufgrund der großen Verfügbarkeit, einfachen Herstellung sowie geringen Kosten weite Verwendung und werden auch heute noch im industriellen Bereich oftmals standardmäßig verwendet. Neben den genannten ökonomischen Vorteilen bieten chlorbasierte Produkte weiterhin den Vorteil, dass sie hochwirksam sind, d. h. sie töten Mikroben einerseits zuverlässig ab und verhindern andererseits die Ausbildung von Resistenzen.
Chlor und seine Produkte werden jedoch in zunehmendem Maße aus Reinigungs- und Desinfektionsmitteln im privaten und medizinischen, insbesondere klinischen, Bereich verdrängt und auch seine Verwendung im gewerblichen und industriellen Bereich ist rückläufig, da die Verwendung chlorhaltiger Produkte auch mit einer Reihe von gravierenden Nachteilen verbunden ist. So ist einerseits die Herstellung von Chlor und chlorhaltigen Produkten unter Gesichtspunkten des Umweltschutzes problematisch, da die Herstellungsverfahren energieaufwändig sind oder unter Einsatz problematischer Stoffe, wie beispielsweise Schwermetallen, durchgeführt werden. Darüber hinaus sind Chlor und seine Verbindung oftmals hochgiftig. Dies gilt auch für eine Vielzahl von bei der Desinfektion entstehenden Abbau- und Nebenprodukten, wie beispielsweise Trihalogenmethane (THM) oder absorbierbare organisch gebundene Halogene (AOX). Selbst das bei der Oxidation oftmals entstehende Chlorid ist nachteilig für die Umwelt, so dass seine Entstehung und Einleitung in Gewässer vermieden werden sollte.

Aus den zuvor genannten Gründen gab und gibt es ein großes Bestreben, Chlor und seine Verbindungen aus Desinfektionsmitteln und Mitteln zur Wasseraufbereitung zu verdrängen und durch umweltverträglichere Produkte zu ersetzen.

Eine geeignete Verbindung, welche Chlor prinzipiell ersetzen kann, ist Wasserstoffperoxid. Wasserstoffperoxid besitzt gleichfalls ein hohes Redoxpotential und ist in der Anwendung deutlich umweltverträglicher als Chlor und chlorhaltige Produkte, da lediglich Wasser bzw. Sauerstoff als Reaktionsprodukte entstehen.

Darüber hinaus ist Wasserstoffperoxid im Gegensatz zu Chlor auch nicht flüchtig, so dass keine giftigen Gase bei der Anwendung freigesetzt werden. Der Einsatz von Wasserstoffperoxid als alleinigem Desinfektionsmittel ist jedoch oftmals nicht angezeigt bzw. sinnvoll, da Wasserstoffperoxid gegenüber Mikroben nicht reaktiv genug ist, d. h. nicht die gewünschten mikrobiziden Eigenschaften aufweist, welche eigentlich zu erwarten wären.

Des Weiteren besitzen Mikroben oftmals wirkungsvolle Schutzmechanismen, um sich gegenüber Wasserstoffperoxid zu schützen. Hierzu zählt, dass Wasserstoffperoxid gegenüber einmal gebildeten Biofilmen und Schleimen, welche beispielsweise in industriellen Anlagen auftreten, eine nur äußerst geringe Wirksamkeit aufweist.

Darüber hinaus neigen Wasserstoffperoxidlösungen auch zur Zersetzung, welche in Anwesenheit geeigneter Katalysatoren, wie Schwermetallionen, auch spontan und explosionsartig erfolgen kann.

Zur Vermeidung der Wirksamkeitsdefizite von Wasserstoffperoxid im Vergleich zu beispielsweise Chlorprodukten werden Wasserstoffperoxid-Lösungen seit den 70er Jahren des 20. Jahrhunderts Silbersalze zugesetzt. Diese silberhaltigen Wasserstoffperoxid-Zusammensetzungen weisen gegenüber reinem Wasserstoffperoxid eine deutliche Wirkungsverstärkung, beruhend auf der synergistischen Wirkung von mikrobizid wirkenden Silbersalzen und gleichfalls mikrobizid wirkendem Wasserstoffperoxid, auf. Silberhaltige Wasserstoffperoxidlösungen sind kommerziell erhältlich und werden beispielsweise unter den Produktnamen "Sanosil®", "Herlisil®" oder "Huwasan®" vertrieben.

Silberhaltige Wasserperoxidlösungen weisen zwar eine mit Chlorprodukten vergleichbare Wirksamkeit gegenüber Mikroben bei gleichzeitig verbesserter Umweltverträglichkeit auf, jedoch besitzen auch diese Produkte eine Reihe gravierender Nachteile. So wird Wasserstoffperoxid beispielsweise durch Schwermetallionen katalytisch zersetzt, was auch für die aus den Silbersalzen freigesetzten Silberionen gilt. Um eine spontane und unter Umständen explosive Zersetzung des Wasserstoffperoxids zu vermeiden, müssen den silberhaltigen Wasserstoffperoxidlösungen folglich spezielle Stabilisatoren zugegeben werden. Bei diesen Stabilisatoren handelt es sich oftmals um Phosphonsäuren, Polycarboxylate oder Phosphorsäure, deren Einsatz aus Gründen des Umweltschutzes jedoch minimiert werden sollte.

Darüber hinaus ist die Stabilisierung von silberhaltigen Wasserstoffperoxidlösungen anspruchsvoll und wird nur von wenigen Anbietern beherrscht, so dass die entsprechenden Produkte am Markt zu hohen Preisen angeboten werden.

Da allerdings ein hoher Bedarf nach stabilisierten silberhaltigen Wasserstoffperoxid-Lösungen besteht, hat es im Stand der Technik nicht an Versuchen gefehlt, Wasserstoffperoxid-Lösungen in Gegenwart von Silberionen zu stabilisieren: So beschreibt beispielsweise die AT 389 802 B die Stabilisierung von silberhaltigen Wasserstoffperoxid-Lösungen durch organische Säuren, wie beispielsweise Weinsäure- oder Zitronensäure.

Auch die US 7,951,404 B2 offenbart die Stabilisierung von silberhaltigen Wasserstoffperoxid-Lösungen mittels Biopolymeren und Phosphorsäure.

Weiterhin offenbart die DE 34 44 055 A1 die Stabilisierung von wässrigen Wasserstoffperoxidlösungen mittels Hexafluorokieselsäure. Aufgrund der Verwendung fluorhaltiger Verbindungen, welche Flusssäure freisetzen können, ist jedoch die Verwendung von Hexafluorokieselsäure nicht unproblematisch und sollte vermieden werden.

Ein weiterer Nachteil von silberhaltigen Wasserstoffperoxid-Lösungen ist, dass sie selbst in stabilisierter Form nur in stark saurem Milieu stabil sind, was ihre Anwendbarkeit einschränkt.

Darüber hinaus wird derzeit eine mögliche negative Auswirkung von Silbersalzen auf Umwelt und Gesundheit diskutiert, so dass deren Einsatz nach Möglichkeit vermieden werden sollte. Erschwerend kommt hinzu, dass durch die neue, seit 1. September 2013 in Kraft getretene Biozid-Verordnung (EU) Nr. 528/2012 die Zulassung neuer Biozide deutlich erschwert ist und auch bereits am Markt befindliche Produkte entsprechenden Prüfungsverfahren unterzogen werden müssen.

Vor diesem Hintergrund ist die weitere Zulassung von silberhaltigen Produkten wahrscheinlich nicht ohne Weiteres, insbesondere nicht ohne aufwändige Studien, zu erwarten. Weiterhin erweist sich in diesem Zusammenhang als problematisch, dass bei der Verwendung silberhaltiger Biozide nahezu zwangsläufig Silberchlorid anfällt, da Chloridionen in nicht speziell aufbereitetem Wasser immer vorhanden sind. Aufgrund von möglichen negativen Einflüssen des Silberchlorids auf die Gesundheit von Mensch und Tier befindet sich Silberchlorid derzeit in speziellen Prüfprogrammen, in welchen letztendlich über die Zulassung vieler silberhaltiger Produkte für Desinfektionszwecke entschieden wird.

Ein Sonderfall der Desinfektion bzw. Wasseraufbereitung betrifft die Wasseraufbereitung oder Wasserkonditionierung von offenen Kühlkreisläufen in großindustriellen Prozessen, wie beispielsweise Kraftwerken. In derartigen Kühlkreisläufen werden in der Regel aus Kostengründen chlorhaltige Desinfektionsmittel zur Unterdrückung der Bildung von Biofilmen eingesetzt, wobei gemeinsam mit dem Desinfektionsmittel ein Komplexbildner, wie beispielsweise Phosphonsäure, aber auch Polyasparaginsäure, mit in den Kühlkreislauf gegeben wird. Der Komplexbildner soll Metallionen komplexieren, welche aufgrund des Flüssigkeitsverlustes und der sich im Laufe des Kühlkreislaufes erhöhenden lonenkonzentration zur Bildung von Ablagerungen, insbesondere in Form von Kesselstein, führen.

Durch die Verwendung von biologisch abbaubaren Komplexbildnern, wie beispielsweise Polyasparaginsäure ist es prinzipiell möglich, die bislang verwendeten Komplexbildner - sogenannte Enthärter -, wie beispielsweise Phosphonsäuren oder Polycarboxylate, durch biologisch abbaubare Präparate zu ersetzen. Polyasparaginsäure besitzt jedoch den gravierenden Nachteil, dass sie insbesondere von chlorhaltigen Desinfektionsmittel schnell zerstört wird, weshalb für die Wasseraufbereitung von Kühlkreisläufen in der Regel noch spezielle Stabilisatoren zugesetzt werden, welche eine Zersetzung der Polyasparaginsäure verhindern sollen.

So beschreibt beispielsweise die DE 198 37 068 A1 ein Mittel zur Wasserbehandlung auf Basis von Polyasparaginsäure, biozid wirkendem Oxidationsmittel und Amidosulfonsäure zur Wasserkonditionierung von Kühlkreisläufen.

All den zuvor genannten Systemen ist jedoch gemein, dass sie kein umweltverträgliches hochpotentes Desinfektionsmittel bereitstellen können, welches universell einsetzbar ist.

Die US 5,840,250 A betrifft Zusammensetzungen und Verfahren zur Desinfizierung einer Kontaktlinse. Insbesondere werden Verfahren offenbart, in welchen eine Kontaktlinse mit einem flüssigen Medium, welches eine wirksame Menge einer oxidativen Desinfektionskomponente umfasst, unter Bedingung zur wirksamen Desinfektion der Kontaktlinse in Kontakt gebracht wird. Das Inkontaktbringen erfolgt in Gegenwart einer Farbindikatorkomponente, welche in dem flüssigen Medium löslich und so ausgewählt ist, dass eine Farbindikation die Gegenwart der oxidativen Desinfektionskomponente im flüssigen Medium anzeigt. Die Farbindikatorkomponente umfasst eine wirksame Menge einer Übergangsmetallkomponente, welche redoxaktiv ist und in einem oxidativen Zustand eine erste Farbe und in einem reduzierten Zustand eine unterschiedliche zweite Farbe aufweist, sowie eine polyanionische Komponente in einer Menge, welche wirksam eine Verfärbung der Kontaktlinse durch die Übergangsmetallkomponente verhindert.

Die US 2010/0143491 A1 betrifft eine organische Persäurepolymerzusammensetzung, welche stabil und geruchlos ist, eine ausreichende Wasserlöslichkeit aufweist sowie als Bakterizid, Bleichmittel und Reinigungsmittel verwendet werden kann. Durch Lösen eines organischen Säurepolymers und Mischen mit Wasserstoffperoxid und einer anorganischen Säure und Halten der Mischung über einen Zeitraum von 1 Stunde bis 1 Monat im Temperaturbereich von 10 bis 80 °C wird die ein organisches Persäurepolymer enthaltende Mischung, welche ein organisches Persäurepolymer in Mengen von 2 bis 50 Gew.-% und in einigen Fällen Wasserstoffperoxid in Mengen von 2 bis 50 Gew.-% und eine anorganische Säure in Mengen von 0,1 bis 10 Gew.-% enthält, erhalten.

Die US 5,610,264 A betrifft ein kontinuierliches Verfahren zur Herstellung von Polyasparaginsäure. Insbesondere können Polysuccinimide, Polyasparaginsäure und Salze der Polyasparaginsäure hergestellt werden durch Erhitzen von Asparaginsäure in Gegenwart von Natriumbisulfat. Das Molekulargewicht des Polymers kann gegenüber Polymeren, welche ohne Verwendung von Natriumbisulfat erhalten werden, gesteigert werden. Polysuccinimide, Polyasparaginsäure oder die Salze der Polyasparaginsäure, welche mit dem Verfahren erhalten werden, haben nur eine schwache Färbung.

Weiterhin betrifft die US 5,521,257 A ein Verfahren zur Herstellung schwach gefärbter Polyaspartat-Homopolymere, -Copolymere oder -Homopolymer-Copolymer-Mischungen und deren Metallsalzen durch oxidative Hydrolyse von Polysuccinimid-Homopoylmeren, -Copolymeren oder -Homopolymer-Copolymer-Mischungen und deren Metallsalzen in Gegenwart chlorfreier nichtchromogener Sauerstoff enthaltender Oxidationsmittel. Bevorzugte Oxidationsmittel sind ausgewählt aus der Gruppe von Wasserstoffperoxid, Natriumpercarbonat, Kaliumpercarbonat, Natriumperborat-Tetrahydrat, Natriumperborat-Monohydrat, Natriumperiodat, Kaliumperiodat und Peroxycarbonsäuren.
Die US 2005/0255172 A1 betrifft ein Hautdesinfektionsmittel als anwendungsfertiges flüssiges Konzentrat oder in Pulverform. Die anwendungsfertigen Flüssigkeiten besitzen einen pH-Wert von etwa 2 bis etwa 6 und umfassen: (a) Wasserstoffperoxid in einer Konzentration von etwa 0,01 bis 4 Gew.-%; (b) mindestens eine grenzflächenaktive Substanz ausgewählt aus Imidazolinderivaten, Alkylbetain, Alkylamidopropylbetainamiden, Alkylamidopropylbetainen, Alkylsulfobetainen, Aminoxiden und deren Derivaten in einer Konzentration von etwa 0,01 bis etwa 15 Gew.-%; (c) mindestens einen Wasserstoffperoxidstabilisator in einer Konzentration von etwa 0,01 bis etwa 4 Gew.-%; (d) mindestens eine Verbindung ausgewählt aus zyklischen Carbonsäuren und deren Salzen in einer Konzentration von etwa 0,01 bis etwa 4 Gew.-% und (e) mindestens ein Hautpflegemittel in einer Konzentration von etwa 0,01 bis etwa 10 Gew.-%.
Die WO 2007/125101 A1 betrifft eine biozide Zusammensetzung, welche Wasserstoffperoxid in einer Konzentration von 0,05 bis 50 Gew.-% und eine Verbindung mit einer Struktur gemäß der Formel R-O-(CH(Y)-CH₂-O)ₙ-CH₂-COOH, wobei R ein Alkyl- oder Alkylenradikal mit 6 bis 12 Kohlenstoffatomen, Y H oder CH₃ mit n=3-10 darstellt, in einer Konzentration von 0,01 bis 60 Gew.-% aufweist.
Die CN 104192870 A betrifft einen Inkrustierungsinhibitor, welcher Polyacrylsäure, Wasserstoffperoxid, einen Tanninextrakt, Natriumcitrat, Zinkchlorid, Natriummolybdat, Polyasparaginsäure, Acrylsäure und Ethanolamin aufweist
Eine Aufgabe der vorliegenden Erfindung ist es somit, eine Zusammensetzung, insbesondere ein Desinfektionsmittel, bereitzustellen, welche die zuvor genannten, im Zusammenhang mit dem Stand der Technik auftretenden Nachteile und Probleme vermeidet oder zumindest abschwächt.

Darüber hinaus ist eine weitere Aufgabe der Erfindung, ein Desinfektionsmittel bereitzustellen, welches die Wirksamkeit von silberhaltigen Wasserstoffperoxidlösungen oder chlorhaltigen Produkten aufweist, jedoch ohne deren umweltproblematische Eigenschaften, und welches möglichst breite Anwendung finden kann.
Eine weitere Aufgabe der vorliegenden Erfindung ist darin zu sehen, lagerstabile Zusammensetzungen, insbesondere Desinfektionsmittel bzw. deren Konzentrate, bereitzustellen, welche nicht zur Zersetzung neigen.
Gegenstand der vorliegenden Erfindung gemäß einem ersten Aspekt der vorliegenden Erfindung ist somit eine Zusammensetzung, insbesondere ein Desinfektionsmittel, mit mikrobizider Wirkung nach Anspruch 1; weitere vorteilhafte Ausgestaltung dieses Erfindungsaspektes sind Gegenstand der diesbezüglichen Unteransprüche.
Weiterer Gegenstand der vorliegenden Erfindung gemäß einem zweiten Aspekt der vorliegenden Erfindung ist die Verwendung der erfindungsgemäßen Zusammensetzung zur Desinfektion gemäß dem diesbezüglichen Verwendungsanspruch.
Schließlich ist weiterer Gegenstand der vorliegenden Erfindung gemäß einem dritten Aspekt der vorliegenden Erfindung die Verwendung eines Polymers zur Verbesserung des Wirkprofils von Wasserstoffperoxid gemäß dem diesbezüglichen Verwendungsanspruch.
Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- bzw. Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.
Darüber hinaus versteht es sich für den Fachmann von selbst, dass alle gewichts- oder mengenbezogenen Prozentangaben vom Fachmann derart ausgewählt werden, dass in der Summe 100 % resultieren.

Dies vorausgeschickt, wird im Folgenden die vorliegende Erfindung näher beschrieben.
Gegenstand der vorliegenden Erfindung - gemäß einem **ersten** Aspekt der vorliegenden Erfindung - ist somit eine Zusammensetzung, insbesondere ein Desinfektionsmittel, mit mikrobizider Wirkung, welches
(a) mindestens ein Polymer mit zumindest teilweise hydrolysierten Polysuccinimid-Einheiten oder dessen Salze und
(b) Wasserstoffperoxid
enthält, wobei das gewichtsbezogene Verhältnis von Polymer zu Wasserstoffperoxid 1 : 50 bis 1 : 1000 beträgt und wobei die Zusammensetzung das Polymer in Mengen von 0,001 bis 5 mg/l, bezogen auf die Zusammensetzung, und Wasserstoffperoxid in Mengen von 5 bis 100 mg/l, bezogen auf die Zusammensetzung, enthält.
Überraschenderweise weist die erfindungsgemäße Zusammensetzung vergleichbare mikrobizide Eigenschaften wie entsprechende silbersalzhaltige Wasserstoffperoxid-Produkte auf und übertrifft diese sogar teilweise. Die erfindungsgemäße Zusammensetzung ist somit in ihrer mikrobiziden Wirkung mit silberhaltigen Wasserstoffperoxid-Lösungen und chlorhaltigen Produkten vergleichbar, jedoch frei von umweltproblematischen Stoffen.
Die erfindungsgemäße Zusammensetzung weist keinerlei Schwermetalle oder sonstige umweltbedenkliche Stoffe auf und ist darüber hinaus, insbesondere bei Verwendung von Polyasparaginsäure, vollständig biologisch abbaubar.

Es hat sich herausgestellt, dass überraschenderweise die Zugabe sehr geringer Mengen eines Polymers mit zumindest teilweise hydrolysierten Polysuccinimid-Einheiten, insbesondere von Polyasparaginsäure, oder dessen Salze zu Wasserstoffperoxidlösungen zu einer unerwarteten Wirkungsverstärkung des Wasserstoffperoxids führt. Dies gilt insbesondere, wenn spezielle Verhältnisse von Polymer zu Wasserstoffperoxid vorliegen.

Im Rahmen der vorliegenden Erfindung ist bevorzugt, wenn das gewichtsbezogene Verhältnis von Polymer zu Wasserstoffperoxid 1 : 100 bis 1 : 750, insbesondere 1 : 150 bis 1 : 500, vorzugsweise 1 : 200 bis 1 : 300, bevorzugt 1 : 250, beträgt. Die zuvor genannten Verhältnisse beziehen sich stets auf die Gesamtmenge an Polymer oder dessen Salzen sowie die Gesamtmenge an Wasserstoffperoxid (H₂O₂) in der Zusammensetzung.

In den Versuchen der Anmelderin hat sich überraschend gezeigt, dass durch die Zugabe von Polymeren mit zumindest teilweise hydrolysierten Polysuccinimid-Einheiten oder deren Salzen, insbesondere von Polyasparaginsäure, in äußerst geringen Konzentrationen die mikrobizide Wirkung von Wasserstoffperoxid-Lösungen deutlich verstärkt werden kann. Insbesondere wird eine mikrobizide Wirkung gefunden, welche der synergistischen Zusammenwirkung von Silberionen und Wasserstoffperoxid in silberhaltigen Wasserstoffperoxid-Lösungen entspricht bzw. diese sogar übertrifft.

Die erfindungsgemäße Zusammensetzung, insbesondere das erfindungsgemäße Desinfektionsmittel, weist eine mikrobizide Wirkung gegenüber sämtlichen Mikroben auf, d. h. alle Arten von Mikroben werden abgetötet. Insbesondere ist die erfindungsgemäße Zusammensetzung effektiv gegenüber Viren, Bakterien, Pilzen und Algen.

Aus bislang nicht geklärten Gründen verstärkt die Zugabe von Polymeren mit zumindest teilweise hydrolysierten Polysuccinimid-Einheiten, insbesondere von Polyasparaginsäure, zu Wasserstoffperoxid, insbesondere wässrigen Wasserstoffperoxid-Lösungen, die Wirkung des Wasserstoffperoxids beträchtlich. Die Oxidationskraft des Wasserstoffperoxids kommt voll zur Entfaltung und kann gezielt gegen Mikroben wirken. Die erfindungsgemäße Zusammensetzung eignet sich somit sowohl zum Einsatz gegen gesundheitsschädliche Mikroben als auch gegen technisch problematische Mikroben.

In den erfindungsgemäß eingesetzten Konzentrationen wirkt das Polymer mit zumindest teilweise hydrolysierten Polysuccinimid-Einheiten, insbesondere Polyasparaginsäuren, nicht als Inkrustierungs-Inhibitor, d. h. die Kesselsteinbildung, beispielsweise in Kühlwassersystemen, wird nicht verhindert, da für den Einsatz der erfindungsgemäßen Zusammensetzung zur Wasseraufbereitung bzw. Wasserkonditionierung eine deutlich geringere Menge an Polymer mit zumindest teilweise hydrolysierten Polysuccinimid-Einheiten, insbesondere Polyasparaginsäure, verwendet wird als zur Wasserkonditionierung von Kühlwassersystemen im Stand der Technik. Es wird vielmehr selektiv eine Wirkungssteigerung bzw. Aktivierung des Wasserstoffperoxids gefunden.

Wiederum überraschend hat sich gezeigt, dass die erfindungsgemäße Zusammensetzung auch gegenüber Zerfall stabilisiert ist und über mehrere Monate ohne Wirkungsverlust lagerfähig ist. Dies ist ein weiterer Vorteil gegenüber den bislang üblicherweise verwendeten silbersalzhaltigen Wasserstoffperoxidlösungen, welche aufwendig, insbesondere durch Zusatz spezieller Stabilisatoren, gegenüber Zerfall geschützt werden müssen.

Bei den im Rahmen der vorliegenden Erfindung eingesetzten Salzen des Polymers mit zumindest teilweise hydrolysierten Polysuccinimid-Einheiten, handelt es sich üblicherweise um Salze mit Metallionen der ersten und zweiten Hauptgruppe des Periodensystems der Elemente. Bevorzugt werden in diesem Zusammenhang Salze der ersten Hauptgruppe des Periodensystems der Elemente, insbesondere Natrium und/oder Kalium, eingesetzt, da die erfindungsgemäß eingesetzten Polymere mit zumindest teilweise hydrolysierten Polysuccinimid-Einheiten mit den Ionen von Metallen der zweiten Hauptgruppe des Periodensystems der Elemente unter Umständen Komplexe bilden können.

Unter den hydrolysierten Polysuccinimid-Einheiten des erfindungsgemäß eingesetzten Polymers ist im Rahmen der vorliegenden Erfindung zu verstehen, dass das Polymer Asparaginsäure bzw. Polyasparaginsäure-Einheiten oder deren jeweilige Salze aufweist. Polysuccinimid, welches auch als Polyanhydroasparaginsäure oder Polyaspartimid bezeichnet wird, kann aus der Polykondensation von Polyasparaginsäure erhalten werden (vgl. Gleichung (1)) und wird gegebenenfalls nach weiterer chemischer Umsetzung üblicherweise als Chelatbildner, Dispergiermittel, Düngemitteladditiv oder Feuchthaltemittel verwendet. 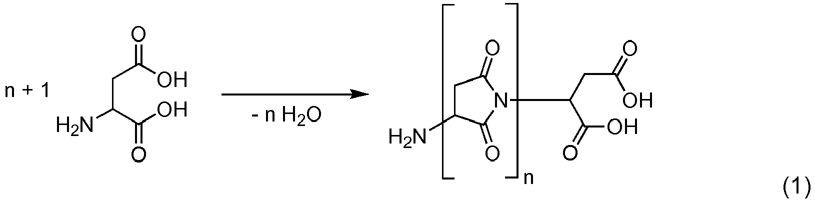 Polysuccinimid lässt sich darüber hinaus durch Umsetzung von Maleinsäure-Monoammoniumsalz sowie Maleinsäureanhydrid und Ammoniak gewinnen.
Durch Hydrolyse, insbesondere durch basische Ringöffnung der Pyrrolidindion-Ringstrukturen im wässrigen Medium, werden Polysuccinimide mit unterschiedlichem Hydrolysegrad und schließlich Polyasparaginsäuren erhalten (vgl. Gleichung (2)). 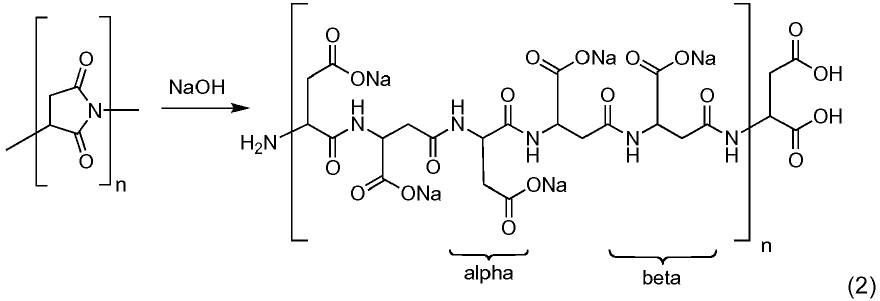 Je nachdem, an welchem Carbonylkohlenstoff des Pyrrolidindion-Ringes der Angriff des Hydroxids erfolgt, werden bei der Hydrolyse des Polysuccinimds alpha- oder beta-Polyasparaginsäure-Einheiten erhalten (vgl. Gleichung (2)). Bei Verwendung verdünnter Natriumhydroxidlösungen wird bei der Hydrolyse vorwiegend die beta-Form, insbesondere mit einem Anteil von bis zu 70 %, in zufälliger Anordnung entlang der Polymerkette gebildet.
Polysuccinimide bzw. Polyasparaginsäuren sind ungiftige, naturnahe und vollständig biologisch abbaubare Substanzen, deren Einsatz sowohl für private wie auch gewerbliche und industrielle Zwecke unbedenklich ist.

Üblicherweise liegt die erfindungsgemäße Zusammensetzung in flüssiger Form, d. h. als Lösung oder Dispersion, vor.

Gemäß einer Ausführungsform der vorliegenden Erfindung ist das Polymer ein Copolymer aus Polysuccinimid und mindestens einem weiteren Polymer.

Falls das erfindungsgemäß eingesetzte Polymer ein Copolymer aus Succinimid und mindestens einem weiteren Polymer ist, so hat es sich bewährt, wenn das weitere Polymer ausgewählt ist aus der Gruppe von Acrylaten, Methacrylaten, Polyestern, Polyurethanen, Polyterephthalaten, Polyvinylalkoholen, Polycaprolactonen, Polyvalerolactonen, Polylactiden, Polyhydroxybutyraten, Polyglykolen und deren Mischungen, insbesondere Polyvinylalkoholen, Polycaprolactonen, Polyvalerolactonen, Polylactiden, Polyhydroxybutyraten, Polyglykolen und deren Mischungen. Insbesondere mit den letztgenannten Copolymeren lassen sich nicht nur wirksame Zusammensetzungen und Desinfektionsmittel erhalten, sondern vielmehr Zusammensetzungen, welche vollständig oder nahezu vollständig biologisch abbaubar sind.

Das erfindungsgemäß eingesetzte Copolymer kann dabei beispielsweise durch Blockcopolymerisation, Kammcopolymerisation oder auch durch Polykondensation erhalten werden. Gleichfalls ist es möglich, dass das erfindungsgemäß eingesetzte Copolymer direkt durch Polymerisation aus den entsprechenden Monomeren erhalten wird.

Im Rahmen der vorliegenden Erfindung ist jedoch bevorzugt, wenn das erfindungsgemäße Polymer ein Polysuccinimid ist.

Insbesondere bei Verwendung von Polysuccinimiden und deren Hydrolyseprodukten werden besonders leistungsfähige Mikrobizidzusammensetzungen erhalten, welche darüber hinaus umweltverträglich und biologisch abbaubar sind.

Wie zuvor bereits ausgeführt, weist das erfindungsgemäß verwendete Polymer zumindest teilweise hydrolysierte Polysuccinimid-Einheiten auf. Was nun den Hydrolysegrad der Polysuccinimid-Einheiten des verwendeten Polymers anbelangt, so kann dieser in weiten Bereichen variieren. Besonders gute Ergebnisse werden jedoch erhalten, wenn die Polysuccinimid-Einheiten des verwendeten Polymers einen Hydrolysegrad von 10 bis 100 %, insbesondere 30 bis 100 %, vorzugsweise 50 bis 100 %, bevorzugt 75 bis 100 %, besonders bevorzugt 90 bis 100 %, bezogen auf die Gesamtzahl der Succinimid-Einheiten, aufweist. Unter dem Hydrolysegrad ist dabei im Rahmen der vorliegenden Erfindung der Anteil der hydrolysierten Polysuccinimid-Einheiten im Verhältnis zur Gesamtzahl der Succinimid-Einheiten, gleichgültig ob hydrolysiert oder nicht hydrolysiert, zu verstehen.

Im Rahmen der vorliegenden Erfindung wird es bevorzugt, wenn die Polysuccinimid-Einheiten vollständig hydrolysiert sind.

Gemäß einer bevorzugten Ausführungsform der vorliegenden Erfindung handelt es sich bei dem erfindungsgemäß eingesetzten Polymer um Polyasparaginsäure oder deren Salze.

Bei den im Rahmen der vorliegenden Erfindung verwendeten Salzen der Polyasparaginsäure handelt es sich üblicherweise um Salze mit Metallen der ersten und zweiten Hauptgruppe des Periodensystems der Elemente. Insbesondere bevorzugt ist dabei die Verwendung von Salzen mit Metallen der ersten Hauptgruppe des Periodensystems der Elemente, insbesondere Natrium und/oder Kalium, vorzugsweise Natrium.

Die Verwendung von Polyasparaginsäure bzw. deren Salzen hat den Vorteil, dass sie ungiftig, umweltverträglich und vollständig biologisch abbaubar ist. Darüber hinaus sind geeignete Polyasparaginsäurelösungen bzw. Lösungen ihrer Salze kommerziell erhältlich.

Erfindungsgemäß bevorzugt eingesetzte Polyasparaginsäuren weisen ein Verhältnis von alpha- zu beta-Polyasparaginsäure-Einheiten im Verhältnis von 1 : 1 bis 1 : 4, insbesondere 1 : 2 bis 1 : 3, auf.

Das im Rahmen der vorliegenden Erfindung eingesetzte Polymer weist üblicherweise ein gewichtsmittleres Molekulargewicht M_{w} im Bereich von 500 bis 25.000 g/mol, insbesondere 1.000 bis 15.000 g/mol, vorzugsweise 1.500 bis 10.000 g/mol, bevorzugt 2.000 bis 8.000 g/mol, besonders bevorzugt 3.000 bis 7.000 g/mol, ganz besonders bevorzugt 4.000 bis 5.000 g/mol, auf. Polymere mit den vorgenannten Molekulargewichten sind in flüssigen Systemen, insbesondere in wässrigen Systemen, üblicherweise gut dispergierbar und/oder löslich, insbesondere löslich.

Darüber hinaus kann es im Rahmen der vorliegenden Erfindung vorgesehen sein, dass das Polymer ein zahlenmittleres Molekulargewicht Mₙ im Bereich von 300 bis 20.000 g/mol, insbesondere 500 bis 15.000 g/mol, vorzugsweise 1.000 bis 10.000 g/mol, bevorzugt 1.500 bis 7.000 g/mol, besonders bevorzugt 2.000 bis 5.000 g/mol, ganz besonders bevorzugt 2.500 bis 4.000 g/mol, aufweist. Die Molekulargewichte der im Rahmen der vorliegenden Erfindung verwendeten Polymere werden mittels Gel-Permeations-Chromatographie (GPC) bestimmt.

Es hat sich überraschenderweise herausgestellt, dass bereits kleine Mengen an Polymer ausreichen, um einerseits das Wasserstoffperoxid gegen Zerfall zu stabilisieren und andererseits dessen mikrobizide Wirkung um ein Vielfaches zu steigern. Das erfindungsgemäß eingesetzte Polymer wirkt - ohne sich auf eine Theorie festlegen zu wollen - somit sozusagen als eine Art Katalysator für die mikrobizide Wirkung des Wasserstoffperoxids, ohne jedoch selbst als Mikrobizid zu wirken.

Die in der erfindungsgemäßen Zusammensetzung verwendete Konzentration an Polymer ist stark vom jeweiligen Einsatzweck der Zusammensetzung, beispielsweise als Mittel zur Wasserkonditionierung oder als Oberflächendesinfektionsmittel, abhängig und kann unter anderem durch geeignetes Verdünnen kommerziell erhältlicher Polymerlösungen eingestellt werden.

Üblicherweise weist die erfindungsgemäße Zusammensetzung ein Löse- oder Dispersionsmittel, insbesondere ein flüssiges Löse- oder Dispersionsmittel auf. In diesem Zusammenhang kann es vorgesehen sein, dass die Zusammensetzung ein organisches Lösemittel und/oder Wasser, vorzugsweise Wasser, aufweist. Der Einsatz organischer Lösemittel ist im Rahmen der vorliegenden Erfindung zwar möglich, jedoch ist die Verwendung wasserbasierter Systeme, insbesondere von Wasser als alleinigem Löse- oder Dispersionsmittel bevorzugt, da Wasser aus gesundheitlichen und umweltverträglichen Gründen unbedenklich ist und darüber hinaus in einer Vielzahl technischer Anwendungen eingesetzt wird.

Was den pH-Wert der erfindungsgemäßen Zusammensetzung anbelangt, so kann dieser gleichfalls in weiten Bereichen variieren. Es hat sich jedoch bewährt, wenn die Zusammensetzung einen pH-Wert im Bereich von 1 bis 11, insbesondere 2 bis 8, vorzugsweise 2 bis 7, bevorzugt 1,5 bis 6, aufweist. Die erfindungsgemäße Zusammensetzung ist bereits im schwach alkalischen und neutralen pH-Wertbereich stabil und kann daher in einer Vielzahl von Anwendungen zum Einsatz kommen, ohne dass spezielle Stabilisatoren eingesetzt werden müssten. Bevorzugt weist die Zusammensetzung jedoch einen sauren pH-Wert auf.

Gemäß einer bevorzugten Ausführungsform der vorliegenden Erfindung weist die Zusammensetzung
(a) mindestens ein Polymer mit zumindest teilweise hydrolysierten Polysuccinimid-Einheiten oder dessen Salze
(b) Wasserstoffperoxid und
(c) Wasser
auf, wobei das gewichtsbezogene Verhältnis von Polymer zu Wasserstoffperoxid 1 : 50 bis 1 : 1.000 beträgt und wobei die Zusammensetzung das Polymer in Mengen von 0,001 bis 5 mg/l, bezogen auf die Zusammensetzung, und Wasserstoffperoxid in Mengen von 5 bis 100 mg/l, bezogen auf die Zusammensetzung, enthält.

Im Rahmen der vorliegenden Erfindung kann es darüber hinaus vorgesehen sein und ist auch bevorzugt, dass die Zusammensetzung aus den zuvor genannten Komponenten (a), (b) und (c) besteht. Die erfindungsgemäße Zusammensetzung benötigt lediglich die drei Komponenten (a), (b) und (c) um einerseits lagerstabil und andererseits ein hochwirksames Mikrobizid zu sein.

Gleichfalls kann es im Rahmen der vorliegenden Erfindung auch vorgesehen sein, dass die Zusammensetzung mindestens ein Additiv enthält.

Falls die erfindungsgemäße Zusammensetzung ein Additiv enthält, so ist dieses üblicherweise ausgewählt aus der Gruppe von pH-Einstellmitteln, Rheologiestellmitteln, Benetzungsmitteln, insbesondere Tensiden, Stabilisatoren und deren Mischungen, insbesondere pH-Einstellmitteln, Rheologiestellmitteln und Benetzungsmitteln. Additive können in der erfindungsgemäßen Zusammensetzung beispielsweise eingesetzt werden, um die Zusammensetzung für bestimmte ausgewählte Anwendungen nutzbar zu machen.

Üblicherweise enthält die Zusammensetzung das Additiv in Mengen von 0,01 bis 10 Gew.-%, insbesondere 0,05 bis 5 Gew.-%, vorzugsweise 0,1 bis 3 Gew.-%, bevorzugt 0,5 bis 2 Gew.-%, bezogen auf die Zusammensetzung.

Im Rahmen der vorliegenden Erfindung wird es bevorzugt, wenn die Zusammensetzung insbesondere zumindest im Wesentlichen frei ist von Schwermetallionen, insbesondere frei ist von Schwermetallionen, vorzugsweise frei ist von Silberionen.

Gleichfalls ist es bevorzugt, wenn die Zusammensetzung insbesondere zumindest im Wesentlichen frei von Silbersalzen, vorzugsweise frei von Silberverbindungen, ist.

Wie zuvor bereits ausgeführt, sind im Rahmen der vorliegenden Erfindung keine Wirkungsverstärker auf Basis von Schwermetallionen, insbesondere in Form von Silber oder dessen Verbindungen notwendig, um die mikrobizide Wirkung des Wasserstoffperoxids zu verstärken.

Üblicherweise ist die Zusammensetzung lagerstabil, insbesondere über einen Zeitraum von 6 Monaten, insbesondere 12 Monaten, vorzugsweise 18 Monaten, bevorzugt 24 Monaten. Unter lagerstabil ist im Rahmen der vorliegenden Erfindung zu verstehen, dass die Zusammensetzung bei Temperaturen von 20 bis 30 °C unter Ausschluss direkter Sonneneinstrahlung gelagert werden kann, ohne dass eine nennenswerte Zersetzung des Wasserstoffperoxids oder ein anders bedingter Abfall der mikrobiziden Wirkung beobachtet wird.

Erfindungsgemäß enthält die Zusammensetzung das Polymer in Mengen von 0,001 bis 5 mg/l, insbesondere 0,005 bis 4 mg/l, vorzugsweise 0,01 bis 2 mg/l, bevorzugt 0,05 bis 1 mg/l, besonders bevorzugt 0,07 bis 0,5 mg/l, ganz besonders bevorzugt 0,1 bis 0,3 mg/l, bezogen auf die Zusammensetzung.

Was nun die Menge an Wasserstoffperoxid in der Zusammensetzung anbelangt, so enthält die Zusammensetzung Wasserstoffperoxid in Mengen von 5 bis 100 mg/l, insbesondere 10 bis 50 mg/l, vorzugsweise 15 bis 40 mg/l, bezogen auf die Zusammensetzung.

Die Zusammensetzung eignet sich in besonderer Weise zur Wasserkonditionierung, insbesondere mikrobiologische Kontrolle von Abwässern oder Kühlwässern sowie zur Konditionierung von Brauchwässern aller Art. Darüber hinaus kann die Zusammensetzung zur Heilung und Bekämpfung von Fischkrankheiten verwendet werden. Schließlich ist ein weiteres Anwendungsgebiet der Zusammensetzung die Aufbereitung von Trinkwasser.

Weiterer Gegenstand der vorliegenden Erfindung - gemäß einem **zweiten** Aspekt der vorliegenden Erfindung - ist die Verwendung der vorbeschriebenen Zusammensetzung zur Desinfektion und/oder zur Wasseraufbereitung.
Weiterer Aspekt der Verwendung der erfindungsgemäßen Zusammensetzung ist die Desinfektion von Nahrungsmitteln und Tiernahrungsmitteln.

Ein Aspekt der vorliegenden Offenbarung ist die Verwendung der erfindungsgemäßen Zusammensetzung in der Hand- und Körperdesinfektion sowie die medizinische Anwendung im Mund-, Hals- und Rachenbereich.
Wiederum weiterer Aspekt der Verwendung der erfindungsgemäßen Zusammensetzung ist die Wasserkonditionierung, insbesondere die mikrobiologische Kontrolle von Abwässern und/oder von Kühlwasser sowie die Konditionierung von Brauchwässern sämtlicher Art. Unter Brauchwasser ist dabei Wasser zu verstehen, welches nicht als Trinkwasser dienen, jedoch für unterschiedlichste Zwecke genutzt werden soll, wie beispielsweise als Füllwasser von Wasserbetten.

Ein weiterer Aspekt der vorliegenden Offenbarung ist die Verwendung der erfindungsgemäßen Zusammensetzung in der Heilung und Bekämpfung von Fischkrankheiten, insbesondere infektiösen Fischkrankheiten, insbesondere durch Zugabe der Zusammensetzung in die Becken, in welchen die erkrankten Fische gehalten werden.
Wiederum weiterer Aspekt der Verwendung der erfindungsgemäßen Zusammensetzung ist die Aufbereitung von Trinkwasser. Hierbei ist insbesondere die Desinfektion von Wasser im Outdoor-Bereich oder im militärischen Bereich und/oder zur Erstversorgung in Katastrophengebieten von besonderer Bedeutung. Darüber hinaus kann die erfindungsgemäße Zusammensetzung auch zur Legionellenbekämpfung in Trinkwasser- und Kühlwassersystemen eingesetzt werden.
Für weitergehende Einzelheiten zu der erfindungsgemäßen Verwendung kann auf die vorhergehenden Ausführung zu der erfindungsgemäßen Zusammensetzung verwiesen werden, welche in Bezug auf die erfindungsgemäße Verwendung entsprechend gelten.
Schließlich ist wiederum weiterer Gegenstand der vorliegenden Erfindung - gemäß einem **dritten** Aspekt der vorliegenden Erfindung - die Verwendung eines Polymers mit zumindest teilweise hydrolysierten Polysuccinimid-Einheiten oder dessen Salzen zur Verbesserung des Wirkprofils, insbesondere der mikrobiziden Eigenschaften, von Wasserstoffperoxid, wobei das gewichtsbezogene Verhältnis von Polymer zu Wasserstoffperoxid 1 : 50 bis 1 : 1.000 beträgt.
Durch die Verwendung eines Polymers mit zumindest teilweise hydrolysierten Polysuccinimid-Einheiten oder dessen Salzen, insbesondere Polyasparaginsäure, wird einerseits die mikrobizide Wirkung des Wasserstoffperoxids erheblich gesteigert und andererseits das Wasserstoffperoxid darüber hinaus vor Zerfall geschützt.
Für weitergehende Einzelheiten zu diesem Erfindungsaspekt kann auf die vorangehenden Ausführungen zu den übrigen Erfindungsaspekten verwiesen werden, welche in Bezug auf die erfindungsgemäße Verwendung eines Polymers entsprechend gelten.
Der Gegenstand der vorliegenden Erfindung wird nachfolgend in exemplarischer Weise durch die Ausführungsbeispiele verdeutlicht.

### Ausführungsbeispiele

### Beispiel 1

Es wird ein Standard-Kühlwasser aus einem offenen Verdunstungskühler vewendet, welches eine relativ hohe mikrobiologische Belastung zeigt.

Das unbehandelte Wasser hat eine mikrobiologische Belastung, d. h. eine Gesamtkeimzahl von ca. 5000 KBE/ml. Die angegebenen Werte für KBE/ml (koloniebildende Einheiten je ml) sind Mittelwerte aus 3 Messungen, die auf ganze Hunderter gerundet werden. Die Messung erfolgt mit Dipslides, wobei je Messwert 3 Dipslides eingesetzt werden.

Es werden 3 Formulierungen für Desinfektionsmittel angesetzt, welche nachfolgend auf ihre Wirksamkeit hin untersucht werden:
A) 50%ige Wasserstoffperoxidlösung (nicht erfindungsgemäß)
B) 50%ige Wasserstoffperoxidlösung mit 500 mg/l Silber, stabilisiert und wirkungsverstärkt, Handelsname "Herlisil®" (nicht erfindungsgemäß)
C) 50%ige Wasserstoffperoxidlösung, stabilisiert und wirkungsverstärkt mit 2 g/l Polyasparaginsäure-Natriumsalz, die Lösung weist ein gewichtsbezogenes Verhältnis von Polyasparaginsäure-Natriumsalz zu Wasserstoffperoxid von 1 : 250 auf

Es werden 3 Testreihen mit jeweils unterschiedlichen Konzentrationen der Formulierungen von Desinfektionsmitteln A, B, und C durchgeführt, wobei die folgenden Konzentrationen an Desinfektionsmittel, bezogen auf 1 I Probenwasser, eingesetzt werden :
I) 60 mg/l Desinfektionsmittel
II) 30 mg/l Desinfektionsmittel
III) 5 mg/l Desinfektionsmittel

**Tabelle 1: Testreihe I mit 60 mg/l Desinfektionsmittel**

| | Desinfektionsmittel | | |
|---|---|---|---|
| t¹ [min] | A | B | C |
| 30 | 2500 KBE/ml | 1500 KBE/ml | 1000 KBE/ml |
| 60 | 2000 KBE/ml | 1000 KBE/ml | <100 KBE/ml |
| 90 | 1000 KBE/ml | <100 KBE/ml | <100 KBE/ml |
| 120 | 1000 KBE/ml | <100 KBE/ml | <100 KBE/ml |

| | | | |
|---|---|---|---|
| ¹: Zeit nach Zugabe | | | |

**Tabelle 2: Testreihe II mit 30 mg/l Desinfektionsmittel**

| | Desinfektionsmittel | | |
|---|---|---|---|
| t¹ [min] | A | B | C |
| 30 | 2500 KBE/ml | 1500 KBE/ml | 1000 KBE/ml |
| 60 | 2500 KBE/ml | 1000 KBE/ml | <100 KBE/ml |
| 90 | 1500 KBE/ml | <100 KBE/ml | <100 KBE/ml |
| 120 | 1500 KBE/ml | <100 KBE/ml | <100 KBE/ml |

| | | | |
|---|---|---|---|
| ¹: Zeit nach Zugabe | | | |

**Tabelle 3: Testreihe III mit 5 mg/l Desinfektionsmittel**

| | Desinfektionsmittel | | |
|---|---|---|---|
| t¹ [min] | A | B | C |
| 30 | 5000 KBE/ml | 3000 KBE/ml | 3500 KBE/ml |
| 60 | 4500 KBE/ml | 2500 KBE/ml | 1500 KBE/ml |
| 90 | 4500 KBE/ml | 1000 KBE/ml | 1000 KBE/ml |
| 120 | 4000 KBE/ml | 1500 KBE/ml | 1000 KBE/ml |

| | | | |
|---|---|---|---|
| ¹: Zeit nach Zugabe | | | |

Es zeigt sich, dass die erfindungsgemäße Kombination von Wasserstoffperoxid und Polyasparaginsäure C eine der silberhaltigen Wasserstoffperoxid-Lösung B zumindest vergleichbare mikrobizide Wirkung aufweist und diese teilweise sogar übertrifft. Der Vergleich mit der handelsüblichen Wasserstoffperoxid-Lösung A belegt darüber hinaus, dass mit der erfindungsgemäßen Formulierung C eine deutliche Aktivierung und Wirkungsverstärkung des Wasserstoffperoxids erzielt wird.

### Beispiel 2

Es wird eine weitere stark mikrobiologisch belastete Industriewasserprobe anderer Herkunft untersucht.

Zur genauen Bestimmung der Gesamtkeimzahl werden die Koloniezahlen bei 22 °C und bei 36 °C nach DIN EN ISO 6222 in einem zertifizierten Labor bestimmt.

Das unbehandelte Ausgangswasser ("Industriewasser") weist folgende Messergebnisse auf:

| | |
|---|---|
| Koloniezahl bei 22 Grad Celsius: | 15.364 KBE/ml |
| Koloniezahl bei 36 Grad Celsius: | 7.091 KBE/ml |

Das Industriewasser wird mit den in Beispiel 1 beschriebenen Formulierungen von Desinfektionsmitteln A, B und C in Konzentrationen von 60 mg/l Desinfektionsmittel und 30 mg/l Desinfektionsmittel, jeweils bezogen auf 1 I Probenwasser, behandelt. Die Einwirkzeit beträgt 4 Stunden.

**Tabelle 4: Zugabe von 60 mg/l Desinfektionsmittel**

| | Desinfektionsmittel | | |
|---|---|---|---|
| T[°C] | A | B | C |
| 22 | 1.340 KBE/ml | 1 KBE/ml | 2 KBE/ml |
| 36 | 780 KBE/ml | 2 KBE/ml | 1 KBE/ml |

**Tabelle 5: Zugabe von 30 mg/l Desinfektionsmittel**

| | Desinfektionsmittel | | |
|---|---|---|---|
| T[°C] | A | B | C |
| 22 | 2.120 KBE/ml | 4 KBE/ml | 2 KBE/ml |
| 36 | 720 KBE/ml | 2 KBE/ml | 2 KBE/ml |

Es zeigt sich, dass die erfindungsgemäße Formulierung C vergleichbare bis verbesserte Ergebnisse im Vergleich zu der silbersalzhaltigen Wasserstoffperoxid-Lösung B aufweist.

Auch der aktivierende und wirkungsverstärkende Effekt der Polyasparaginsäure auf das Wasserstoffperoxid wird im Vergleich mit der handelsüblichen Wasserstoffperoxid-Lösung A deutlich.

## Patentansprüche

1. Zusammensetzung, insbesondere Desinfektionsmittel, mit mikrobizider Wirkung, aufweisend
(a) mindestens ein Polymer mit zumindest teilweise hydrolysierten Polysuccinimid-Einheiten oder dessen Salze und
(b) Wasserstoffperoxid,
wobei das gewichtbezogene Verhältnis von Polymer zu Wasserstoffperoxid 1 : 50 bis 1 : 1.000 beträgt und wobei die Zusammensetzung das Polymer in Mengen von 0,001 bis 5 mg/l, bezogen auf die Zusammensetzung, und Wasserstoffperoxid in Mengen von 5 bis 100 mg/l, bezogen auf die Zusammensetzung, enthält.

2. Zusammensetzung nach Anspruch 1, **dadurch gekennzeichnet, dass** das gewichtbezogene Verhältnis von Polymer zu Wasserstoffperoxid 1 : 100 bis 1 : 750, insbesondere 1 : 150 bis 1 : 500, vorzugsweise 1 : 200 bis 1 : 300, bevorzugt 1 : 250, beträgt.

3. Zusammensetzung nach Anspruch 1 oder 2, **dadurch gekennzeichnet, dass** das Polymer ein Copolymer aus Polysuccinimid und mindestens einem weiteren Polymer ist.

4. Zusammensetzung nach Anspruch 3, **dadurch gekennzeichnet, dass** das weitere Polymer ausgewählt ist aus der Gruppe von Acrylaten, Methacrylaten, Polyestern, Polyurethanen, Polyterephthalaten, Polyvinylalkoholen, Polycaprolactonen, Polyvalerolactonen, Polylactiden, Polyhydroxybutyraten, Polyglykolen und deren Mischungen, insbesondere Polyvinylalkoholen, Polycaprolactonen, Polyvalerolactonen, Polylactiden, Polyhydroxybutyraten, Polyglykolen und deren Mischungen.

5. Zusammensetzung nach Anspruch 1 oder 2, **dadurch gekennzeichnet, dass** das Polymer ein Polysuccinimid ist.

6. Zusammensetzung nach einem der Ansprüche 1 bis 5, **dadurch gekennzeichnet,**
**dass** die Polysuccinimid-Einheiten einen Hydrolysegrad von 10 bis 100 %, insbesondere 30 bis 100 %, vorzugsweise 50 bis 100 %, bevorzugt 75 bis 100 %, besonders bevorzugt 90 bis 100 %, bezogen auf die Gesamtzahl der Succinimideinheiten, aufweisen und/oder dass die Polysuccinimid-Einheiten vollständig hydrolysiert sind.

7. Zusammensetzung nach einem der vorangehenden Ansprüche, **dadurch gekennzeichnet, dass** das Polymer Polyasparaginsäure oder deren Salze ist.

8. Zusammensetzung nach einem der vorangehenden Ansprüche, **dadurch gekennzeichnet,**
**dass** das Polymer ein gewichtsmittleres Molekulargewicht M_{w} im Bereich von 500 bis 25.000 g/mol, insbesondere 1.000 bis 15.000 g/mol, vorzugsweise 1.500 bis 10.000 g/mol, bevorzugt 2.000 bis 8.000 g/mol, besonders bevorzugt 3.000 bis 7.000 g/mol, ganz besonders bevorzugt 4.000 bis 5.000 g/mol, aufweist und/oder dass das Polymer ein zahlenmittleres Molekulargewicht Mₙ im Bereich von 300 bis 20.000 g/mol, insbesondere 500 bis 15.000 g/mol, vorzugsweise 1.000 bis 10.000 g/mol, bevorzugt 1.500 bis 7.000 g/mol, besonders bevorzugt 2.000 bis 5.000 g/mol, ganz besonders bevorzugt 2.500 bis 4.000 g/mol, aufweist.

9. Zusammensetzung nach einem der vorangehenden Ansprüche, **dadurch gekennzeichnet, dass** die Zusammensetzung ein organisches Lösemittel und/oder Wasser, vorzugsweise Wasser, aufweist.

10. Zusammensetzung nach einem der vorangehenden Ansprüche, **dadurch gekennzeichnet, dass** die Zusammensetzung einen pH-Wert im Bereich von 1 bis 11, insbesondere 2 bis 8, vorzugsweise 2 bis 7, bevorzugt 1,5 bis 6, aufweist.

11. Zusammensetzung nach einem der vorangehenden Ansprüche, **dadurch gekennzeichnet, dass** die Zusammensetzung zumindest im Wesentlichen frei von Silbersalzen, vorzugsweise frei von Silberverbindungen, ist.

12. Zusammensetzung nach einem der vorangehenden Ansprüche, **dadurch gekennzeichnet, dass** die Zusammensetzung das Polymer in Mengen von 0,005 bis 4 mg/l, vorzugsweise 0,01 bis 2 mg/l, bevorzugt 0,05 bis 1 mg/l, besonders bevorzugt 0,07 bis 0,5 mg/l, ganz besonders bevorzugt 0,1 bis 0,3 mg/l, bezogen auf die Zusammensetzung, enthält.

13. Zusammensetzung nach einem der vorangehenden Ansprüche, **dadurch gekennzeichnet, dass** die Zusammensetzung Wasserstoffperoxid in Mengen von 10 bis 50 mg/l, vorzugsweise 15 bis 40 mg/l, bezogen auf die Zusammensetzung, enthält.

14. Nicht-therapeutische Verwendung einer Zusammensetzung nach einem der vorangehenden Ansprüche zur Desinfektion und/oder Wasseraufbereitung.

15. Verwendung eines Polymers mit zumindest teilweise hydrolysierten Polysuccinimid-Einheiten oder dessen Salzen zur Verbesserung des Wirkprofils, insbesondere der mikrobiziden Eigenschaften, von Wasserstoffperoxid, wobei das gewichtbezogene Verhältnis von Polymer zu Wasserstoffperoxid 1 : 50 bis 1 : 1.000 beträgt.

## Claims

1. A composition, particularly disinfectant, having a microbicidal effect, comprising
(a) at least one polymer with at least partially hydrolysed polysuccinimide units or salts thereof and
(b) hydrogen peroxide,
wherein the weight-related ratio of polymer to hydrogen peroxide is 1: 50 to 1: 1000 and wherein the composition contains the polymer in quantities of 0.001 to 5 mg/l, in relation to the composition, and hydrogen peroxide in quantities of 5 to 100 mg/l, in relation to the composition.

2. The composition according to claim 1, **characterised in that** the weight-related ratio of polymer to hydrogen peroxide is 1: 100 to 1: 750, in particular 1: 150 to 1: 500, preferably 1: 200 to 1: 300, more preferably 1: 250.

3. The composition according to claim 1 or 2, **characterised in that** the polymer is a copolymer of polysuccinimide and at least one further polymer.

4. The composition according to claim 3, **characterised in that** the further polymer is selected from the group of acrylates, methacrylates, polyesters, polyurethanes, polyterephthalates, polyvinyl alcohols, polycaprolactones, polyvalerolactones, polylactides, polyhydroxybutyrates, polyglycols and mixtures thereof, particularly polyvinyl alcohols, polycaprolactones, polyvalerolactones, polylactides, polyhydroxybutyrates, polyglycols and mixtures thereof.

5. The composition according to claim 1 or 2, **characterised in that** the polymer is a polysuccinimide.

6. The composition according to one of claims 1 to 5, **characterised in that** the polysuccinimide units have a degree of hydrolysis of 10 to 100%, particularly 30 to 100%, preferably 50 to 100%, more preferably 75 to 100%, particularly preferably 90 to 100%, in relation to the total amount of succinimide units and/or
that the polysuccinimide units are completely hydrolysed.

7. The composition according to one of the preceding claims, **characterised in that** the polymer is polyaspartic acid or salts thereof.

8. The composition according to one of the preceding claims, **characterised in that** the polymer has a weight-average molecular weight M_{w} within the range of 500 to 25,000 g/mol, particularly 1,000 to 15,000 g/mol, preferably 1,500 to 10,000 g/mol, more preferably 2,000 to 8,000 g/mol, particularly preferably 3,000 to 7,000 g/mol, very particularly preferably 4,000 to 5,000 g/mol, and/or
that the polymer has a number-average molecular weight Mₙ within the range of 300 to 20,000 g/mol, particularly 500 to 15,000 g/mol, preferably 1,000 to 10,000 g/mol, more preferably 1,500 to 7,000 g/mol, particularly preferably 2,000 to 5,000 g/mol, very particularly preferably 2,500 to 4,000 g/mol.

9. The composition according to one of the preceding claims, **characterised in that** the composition comprises an organic solvent and/or water, preferably water.

10. The composition according to one of the preceding claims, **characterised in that** the composition has a pH value within the range of 1 to 11, particularly 2 to 8, preferably 2 to 7, more preferably 1.5 to 6.

11. The composition according to one of the preceding claims, **characterised in that** the composition is at least substantially free of silver salts, preferably free of silver compounds.

12. The composition according to one of the preceding claims, **characterised in that** the composition contains the polymer in quantities of 0.005 to 4 mg/l, preferably 0.01 to 2 mg/l, more preferably 0.05 to 1 mg/l, particularly preferably 0.07 to 0.5 mg/l, very particularly preferably 0.1 to 0.3 mg/l, in relation to the composition.

13. The composition according to one of the preceding claims, **characterised in that** the composition contains hydrogen peroxide in quantities of 10 to 50 mg/l, preferably 15 to 40 mg/l, in relation to the composition.

14. A non-therapeutic use of a composition according to one of the preceding claims for disinfection and/or water treatment.

15. A use of a polymer with at least partially hydrolysed polysuccinimide units or salts thereof for the improvement of the efficiency, particularly of the microbicidal properties, of hydrogen peroxide, wherein the weight-related ratio of polymer to hydrogen peroxide is 1: 50 to 1: 1,000.

## Revendications

1. Composition, en particulier agent désinfectant, ayant un effet microbicide, présentant
(a) au moins un polymère comportant des motifs polysuccinimide au moins partiellement hydrolysés, ou des sels de celui-ci, et
(b) du peroxyde d'hydrogène,
le rapport en poids du polymère au peroxyde d'hydrogène étant de 1: 50 à 1 : 1000, et la composition contenant le polymère en des quantités allant de 0,001 à 5 mg/l, rapporté à la composition, et le peroxyde d'hydrogène en des quantités allant de 5 à 100 mg/l, rapporté à la composition.

2. Composition selon la revendication 1, **caractérisée en ce que** le rapport en poids du polymère au peroxyde d'hydrogène est de 1: 100 à 1 : 750, en particulier de 1 : 150 à 1 : 500, de préférence de 1 : 200 à 1 : 300, préférentiellement de 1 : 250.

3. Composition selon la revendication 1 ou 2, **caractérisée en ce que** le polymère est un copolymère de polysuccinimide et d'au moins un autre polymère.

4. Composition selon la revendication 3, **caractérisée en ce que** l'autre polymère est choisi dans le groupe consistant en les acrylates, les méthacrylates, les polyesters, les polyuréthanes, les polytéréphtalates, les poly(alcools vinyliques), les polycaprolactones, les polyvalérolactones, les polylactides, les polyhydroxybutyrates, les polyglycols et les mélanges de ceux-ci, en particulier les poly(alcools vinyliques), les polycaprolactones, les polyvalérolactones, les polylactides, les polyhydroxybutyrates, les polyglycols et les mélanges de ceux-ci.

5. Composition selon la revendication 1 ou 2, **caractérisée en ce que** le polymère est un polysuccinimide.

6. Composition selon l'une quelconque des revendications 1 à 5, **caractérisée en ce que** les motifs polysuccinimide présentent un degré d'hydrolyse de 10 à 100 %, en particulier de 30 à 100 %, de préférence de 50 à 100 %, préférentiellement de 75 à 100 %, d'une manière particulièrement préférée de 90 à 100 %, rapporté au nombre total des motifs succinimide, et ou **en ce que** les motifs polysuccinimide sont entièrement hydrolysés.

7. Composition selon l'une quelconque des revendications précédentes, **caractérisée en ce que** le polymère est l'acide polyaspartique ou les sels de celui-ci.

8. Composition selon l'une quelconque des revendications précédentes, **caractérisée en ce que**
le polymère présente une masse moléculaire moyenne en poids M_{w} comprise dans la plage de 500 à 25 000 g/mol, en particulier de 1000 à 15 000 g/mol, de préférence de 1500 à 10 000 g/mol, préférentiellement de 2000 à 8000 g/mol, d'une manière particulièrement préférée de 3000 à 7000 g/mol, d'une manière tout particulièrement préférée de 4000 à 5000 g/mol, et/ou
le polymère présente une masse moléculaire moyenne en nombre Mₙ comprise dans la plage de 300 à 20 000 g/mol, en particulier de 500 à 15 000 g/mol, de préférence de 1000 à 10 000 g/mol, préférentiellement de 1500 à 7000 g/mol, d'une manière particulièrement préférée de 2000 à 5000 g/mol, d'une manière tout particulièrement préférée de 2500 à 4000 g/mol.

9. Composition selon l'une quelconque des revendications précédentes, **caractérisée en ce que** la composition comprend un solvant organique et/ou de l'eau, en particulier de l'eau.

10. Composition selon l'une quelconque des revendications précédentes, **caractérisée en ce que** la composition présente un pH compris dans la plage de 1 à 11, en particulier de 2 à 8, de préférence de 2 à 7, préférentiellement de 1,5 à 6.

11. Composition selon l'une quelconque des revendications précédentes, **caractérisée en ce que** la composition est, au moins pour l'essentiel, exempte de sels d'argent, de préférence exempte de composés de l'argent.

12. Composition selon l'une quelconque des revendications précédentes, **caractérisée en ce que** la composition contient le polymère en des quantités allant de 0,005 à 4 mg/l, de préférence de 0,01 à 2 mg/l, préférentiellement de 0,05 à 1 mg/l, d'une manière particulièrement préférée de 0,07 à 0,5 mg/l, d'une manière tout particulièrement préférée de 0,1 à 0,3 mg/l, rapporté à la composition.

13. Composition selon l'une quelconque des revendications précédentes, **caractérisée en ce que** la composition contient du peroxyde d'hydrogène en des quantités allant de 10 à 50 mg/l, de préférence de 15 à 40 mg/l, rapporté à la composition.

14. Utilisation non thérapeutique d'une composition selon l'une quelconque des revendications précédentes pour la désinfection et/ou le traitement de l'eau.

15. Utilisation d'un polymère comportant des motifs polysuccinimide au moins partiellement hydrolysés ou de sels de celui-ci, pour améliorer le profil d'action, en particulier les propriétés microbicides, du peroxyde d'hydrogène, le rapport en poids du polymère au peroxyde d'hydrogène étant de 1 : 50 à 1 : 1000.
